# FASCICULE DE BREVET EUROPEEN

(11) **EP 2 204 085 B1**
(45) Date de publication et mention de la délivrance du brevet: **17.07.2013**
(21) Numéro de dépôt: 10158014.0
(22) Date de dépôt: 02.05.2007
(51) Int. Cl.: A01G 31/00

(54) **Support végétal pour la culture hors sol des plantes maraîchères et horticoles**
Pflanzlicher Träger zum erdlosen Anbau von Gemüse- und Gartengewächsen
Vegetable support for soilless cultivation of market and horticultural plants

(30) Priorité: 20.06.2006 FR 0605473
(43) Date de publication de la demande: 07.07.2010
(62) Demande divisionnaire de: 07107360.5
(73) Titulaire: Nucea Substrate SARL, 33420 Rauzan (FR)
(72) Inventeur: Strelow, Laurent, 07690, VANOSC (FR); Besiers, Jérôme, 33670 CREON (FR)
(74) Mandataire: Ravina, Bernard

(56) Documents cités:
- EP-A- 1 082 894
- FR-A1- 2 627 663
- FR-A1- 2 666 489
- US-A- 3 877 172

## Description

### Domaine technique

La présente invention se rapporte à un support en matériau végétal utilisable pour la culture sous serre et hors-sol des plantes maraîchères et horticoles.

La présente invention est une division de la demande européenne n°0710360.

### Etat de la technique

On connaît l'état de la technique des supports de culture principalement dédiés à la culture hors-sol. Selon cette technique de culture, les supports de culture sont disposés en rang sur un sol profilé recouvert d'un film en matière synthétique pour l'évacuation du drainage ou dans des goulottes horizontales posées au sol ou suspendues à la structure de la serre. Les rangs de culture sont équipés d'un réseau d'irrigation des supports de culture, constitué de tuyaux d'arrosage et de buses ou de systèmes gouttes à gouttes.

Chaque support de culture est habituellement constitué d'un pain en matériau végétal disposé dans un sac en une matière synthétique, opaque à la lumière: voir par example FR 2 666 489 A1.

Avant usage, le pain se présente dans un état comprimé. Lors de sa mise en service le pain de culture est irrigué. Sous l'effet de cet apport d'eau, le pain de culture est amené à se dilater et à combler le volume interne du sac.

L'opacité du sac permet de maintenir le système racinaire des plantes à l'abri de la lumière et de reproduire les conditions naturelles de pousse. Le système racinaire se développe dans le pain de culture et le colonise complètement.

Le pain de culture est constitué d'un mélange compacté de fibres et de fragments de noix de coco plus ou moins gros. Ces fragments, en combinaison avec la fibre, déterminent un degré de porosité du pain à l'air et son aptitude à stocker l'eau, cette dernière étant d'autant plus faible que le degré de porosité est élevé.

### Divulgation de l'invention

### Problème technique

Le système racinaire de chaque plante, pour un bon développement requiert une aération adéquate et un apport d'eau suffisant et ce sans excès.

Les pains à forte porosité, en raison de leur faible capacité à retenir l'eau, requièrent des apports d'eau fréquents pour couvrir les besoins hydriques de la plante. Les supports de culture dotés de tels pains sont utilisés principalement dans les régions à taux d'humidité élevé ou bien pour les cultures de début de printemps, de fin d'automne ou d'hiver.

L'arrosage fréquent des pains se traduit bien souvent par une stagnation d'eau sous les pains de culture à l'origine d'une dégradation du système racinaire par asphyxie ce qui entraîne le pourrissement des racines.

Les pains de culture à faible porosité présentent une capacité de rétention d'eau importante. Ils conviennent particulièrement pour les régions chaudes par exemple pour les régions du sud de l'Europe ou pour les cultures d'été. En corollaire, le système racinaire des plantes est peu aéré et pour cette raison, peu développé. Cet inconvénient se traduit par une baisse du rendement des plantes.

### Solution technique

La présente invention a pour objet de pallier les inconvénients précédemment cités en mettant en oeuvre un pain de culture dédié à la culture hors-sol qui présente à la fois une bonne capacité de stockage de l'eau qu'une bonne capacité d'aération du système racinaire.

À cet effet, le support de culture selon la présente invention, comprend notamment un pain de culture et un sac contenant ledit pain, lequel sac comporte de place en place des ouvertures sous forme de fentes prévues notamment pour l'évacuation de l'excès d'eau d'arrosage, ledit pain de culture, sous forme d'un parallélépipède rectangle, présentant deux grandes faces horizontales supérieures et inférieures, deux grandes faces latérales verticales droite et gauche et deux faces d'extrémité, se caractérisant essentiellement en ce que ses grandes faces latérales verticales présentent des rainures verticales ouvertes aux deux extrémités et débouchant dans les faces horizontales supérieure et inférieure, les grandes faces latérales étant prévues pour être au contact du système racinaire des plantes.

Chaque rainure permet d'une part l'aération du pain et d'autre part facilite l'évacuation de l'excès d'eau vers le fond du sac et vers les ouvertures de ce dernier.

Il est donc possible d'assurer un arrosage en continu sans risque de stagnation d'eau et d'assurer une bonne aération du pain de culture afin de favoriser la pousse et le développement racinaire.

Selon une autre caractéristique de l'invention, les grandes faces du pain de culture ainsi que les faces des rainures formées, sont recouvertes d'une couche de latex.

Une telle disposition permet de conserver dans le temps le dessin des différentes rainures et éviter leurs destructions notamment par dilatation du pain lors de sa mise en service.

### Brève description des dessins

D'autres avantages, buts et caractéristiques de l'invention apparaîtront à la lecture de la description d'une forme préférée de réalisation, en se référant aux dessins annexés en lesquels :

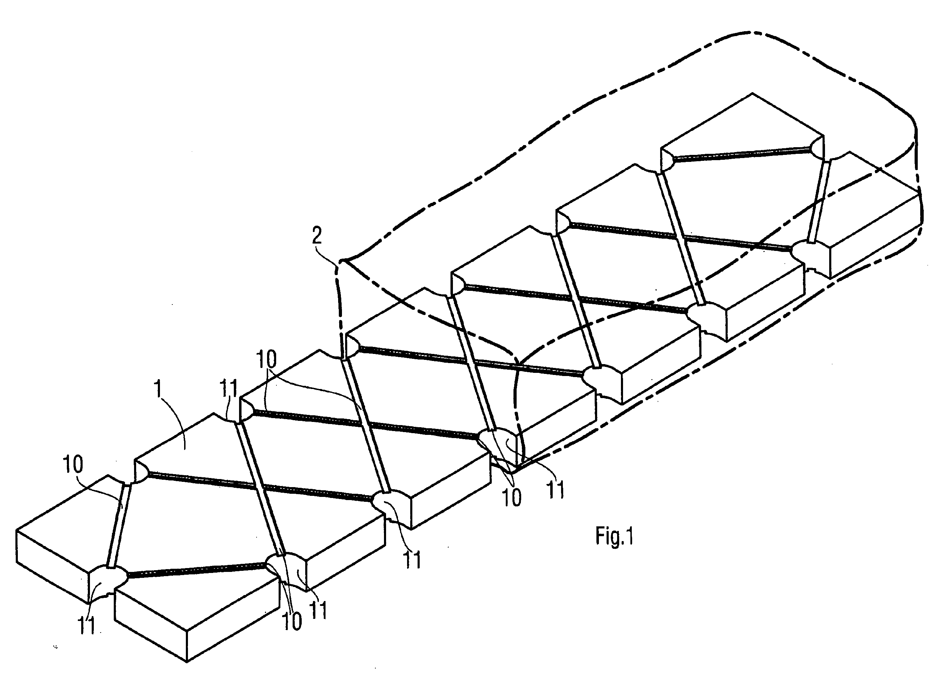

la figure 1 est une vue en perspective, en écorché, d'un support de culture selon l'invention, le sac que comporte ce support étant représenté en trait mixte fort,

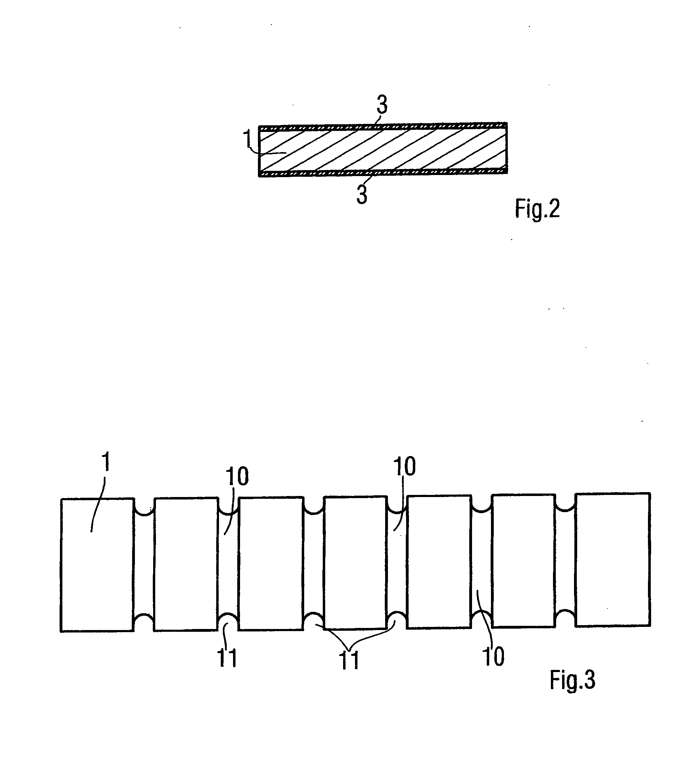

la figure 2 est une vue en coupe du pain de culture,

la figure 3 est une vue de dessous d'un pain de culture selon une autre forme de réalisation.

### Meilleur mode de réalisation de l'invention

Tel que représenté le support de culture selon l'invention pour culture hors sol des plantes maraîchères et horticoles, comprend un pain 1 en matériau végétal et éventuellement un sac 2 destiné à contenir le pain de culture et formant gaine autour de ce dernier. La paroi de ce sac pourra être équipée de place en place de fentes traversantes pour faciliter l'évacuation de l'excès d'eau d'arrosage.

Ce support de culture est destiné à être disposé sur un sol profilé recouvert d'un film en matière synthétique pour l'évacuation du drainage ou dans des goulottes horizontales posées au sol ou suspendues à la structure de la serre abritant la culture hors-sol.

Le pain de culture 1, préférentiellement de forme parallélépipédique, est constitué par un mélange de fibre et de fragments de noix de coco. Comme on peut le voir, le pain de culture présente deux grandes faces horizontales, deux grandes faces latérales verticales et deux grandes faces latérales d'extrémité.

Avant utilisation, le pain de culture 1 se présente sous un état comprimé. En vue de son utilisation, le pain de culture est imbibé d'eau ce qui provoque sa dilation dans le sac 2.

Le sac 2 est réalisé en une matière synthétique étanche à la lumière. Ce sac présente de place en place, le long de ses deux flancs, une série d'encoches d'aération et d'évacuation de l'excès d'eau d'arrosage vers la goulotte support.

Conformément à l'invention, le pain de culture 1 sur l'une au moins de ses faces prévue pour être au contact du système racinaire de la plante, présente au moins une rainure ouverte au moins à l'une de ses deux extrémités. Préférentiellement, la rainure sera ouverte à ses deux extrémités. Cette rainure débouchera dans les deux faces adjacentes.

Selon une forme de réalisation, le pain de culture et les deux grandes faces verticales du pain sont creusées de rainures verticales 11 régulièrement espacées.

À titre d'exemple purement indicatif les rainures verticales 11 présentent une profondeur de vingt millimètres pour une largeur de vingt millimètres.

Avantageusement, au moins les grandes faces du pain de culture 1 sont recouvertes d'une couche de latex 3. Cette couche de latex 3 a essentiellement pour but d'assurer la cohésion du pain en surface et d'éviter la destruction des rainures.

Le pain de culture est avantageusement réalisé par compression d'une masse fibreuse dans un moule approprié. La compression est avantageusement réalisée à la presse comme connu.

Préférentiellement, les couches de latex sont apposées sur la masse fibreuse avant compression de cette dernière. Ainsi lors de la compression, l'énergie dégagée engendre une fusion superficielle de la couche de latex pour le moins de sa face en contact avec la masse fibreuse, ce qui renforce l'ancrage de la couche de latex au pain de culture et renforce la cohésion de ce dernier.

Il a de soi que la présente invention peut recevoir tous aménagements et variantes du domaine des équivalents techniques sans pour autant sortir du cadre du présent brevet, tel que définii par les revendications.

## Revendications

1. Support de culture comprenant notamment un pain de culture (1) contenu dans un sac (2) comportant de place en place des ouvertures sous forme de fentes prévues pour l'évacuation de l'excès d'eau d'arrosage, ledit pain de culture, sous forme d'un parallélépipède rectangle, présentant deux grandes faces horizontales supérieures et inférieures, deux grandes faces latérales verticales droite et gauche et deux faces latérales d'extrémité, **caractérisé en ce que** les grandes faces latérales verticales présentent des rainures (11) verticales ouvertes aux deux extrémités et débouchant dans les faces horizontales supérieure et inférieure, les grandes faces latérales étant prévues pour être au contact du système racinaire des plantes.

2. Support de culture selon la revendication 1, **caractérisé en ce que** les rainures verticales (11) des grandes faces latérales verticales sont régulièrement espacées.

3. Support de culture selon la revendication 1 et la revendication 2, **caractérisé en ce que** les grandes faces horizontales du pain de culture (1) sont recouvertes d'une couche de latex.

4. Support de culture selon l'une quelconque des revendications 1 à 3, **caractérisé en ce que** le pain de culture (1) est constitué d'un mélange de fibres et de débris de noix de coco.

## Patentansprüche

1. Bepflanzungsträger, insbesondere umfassend einen Bepflanzungskuchen (1), der in einem Beutel (2) enthalten ist, der stellenweise Öffnungen in Form von Schlitzen umfasst, die für die Ableitung von überschüssigem Gießwasser vorgesehen sind, wobei der Bepflanzungskuchen in Form eines rechteckigen Parallelepipeds eine obere und eine untere große Horizontalseite, eine rechte und eine linke große vertikale Seitenfläche und zwei Endseitenflächen aufweist, **dadurch gekennzeichnet, dass** die großen vertikalen Seitenflächen vertikale Rillen (11) aufweisen, die an den beiden Enden offen sind und in die obere und untere Horizontalseite münden, wobei die großen Seitenflächen dazu vorgesehen sind, mit dem Wurzelsystem der Pflanzen in Kontakt zu stehen.

2. Bepflanzungsträger nach Anspruch 1, **dadurch gekennzeichnet, dass** die vertikalen Rillen (11) der großen vertikalen Seitenflächen in regelmäßigen Abständen angeordnet sind.

3. Bepflanzungsträger nach Anspruch 1 oder Anspruch 2, **dadurch gekennzeichnet, dass** die großen Horizontalseiten des Bepflanzungskuchens mit einer Latexschicht überzogen sind.

4. Bepflanzungsträger nach einem der Ansprüche 1 bis 3, **dadurch gekennzeichnet, dass** der Bepflanzungskuchen (1) aus einer Mischung aus Fasern und zerkleinerter Kokosnuss gebildet ist.

## Claims

1. A cultivation medium, comprising in particular a cultivation bed (1) contained in a bag (2) comprising from place to place openings in the form of slots provided for the discharge of excess irrigation water, said cultivation bed, in the form of a right-angled parallelepiped, providing two top and bottom horizontal large faces, two right and left vertical lateral large faces and two end lateral faces, **characterised in that** the vertical lateral large faces have vertical grooves (11) open at the two ends and emerging in the top and bottom horizontal faces, the lateral large faces being designed to be in contact with the root system of the plants.

2. A cultivation medium according to claim 1, **characterised in that** the vertical grooves (11) of the vertical lateral large faces are regularly spaced apart.

3. A cultivation medium according to claim 1 and claim 2, **characterised in that** the horizontal large faces of the cultivation bed (1) are covered with a layer of latex.

4. A cultivation medium according to any one of claims 1 to 3, **characterised in that** the cultivation bed (1) consists of a mixture of coconut debris and fibres.
